**Europäisches Patentamt**

**European Patent Office**

**Office européen des brevets**

(19)

(11) Veröffentlichungsnummer: **0 101 666**
**B1**

(12) **EUROPÄISCHE PATENTSCHRIFT**

(45) Veröffentlichungstag der Patentschrift:
**19.11.87**

(51) Int. Cl.⁴: **C 09 B 67/10,** C 09 B 67/04

(21) Anmeldenummer: **83810360.4**

(22) Anmeldetag: **15.08.83**

(54) **Mahlen von organischen Pigmenten.**

(30) Priorität: **20.08.82 CH 4979/82**

(43) Veröffentlichungstag der Anmeldung:
**29.02.84 Patentblatt 84/9**

(45) Bekanntmachung des Hinweises auf die Patenterteilung:
**19.11.87 Patentblatt 87/47**

(84) Benannte Vertragsstaaten:
**BE CH DE FR GB IT LI NL**

(56) Entgegenhaltungen:
**CH - A - 381 781**
**DE - A - 2 625 335**
**DE - A - 2 714 778**
**GB - A - 1 113 060**
**US - A - 3 046 282**

(73) Patentinhaber: **CIBA-GEIGY AG, Klybeckstrasse 141, CH-4002 Basel (CH)**

(72) Erfinder: **Bäbler, Fridolin, Dr., Route du Couchant 12, CH-1723 Marly (CH)**

ACTORUM AG

## Beschreibung

Bei ihrer Herstellung in grobkristalliner Form anfallende organische Pigmente müssen in der Regel einer Nachbehandlung oder sogenannten Konditionierung unterworfen werden, um eine anwendbare und koloristisch wertvolle Pigmentform zu erhalten. Durch die Nachbehandlung oder Konditionierung soll eine insbesondere bezüglich Farbstärke optimale Teilchengrösse erzielt werden. Eine bekannte Methode zur Nachbehandlung oder Konditionierung von organischen Pigmenten ist die Mahlung in Wasser. Doch sind Pigmentkristalle beim Mahlen in Nassmahlvorrichtungen hohen Druck- und Prallkräften ausgesetzt. Die Kristalle werden dadurch nicht nur zerkleinert, sondern je nach Art des Pigmentes auch mehr oder weniger stark reagglomeriert. Dies führt dann zu schlecht dispergierbaren Pigmenten und somit zu farbschwachen Ausfärbungen.

Es sind verschiedene Hilfsmittel bekannt, die während dem Mahlprozess zugegeben werden können, um die Reagglomerierung der Pigmentteilchen zu verringern. Diese Mahlhilfsmittel weisen verschiedene Nachteile auf. So müssen sie beispielsweise in unwirtschaftlich grossen Mengen eingesetzt werden, verlangen eine lange Mahldauer, eignen sich nur für bestimmte Pigmente oder sind nur mit viel Aufwand zu entfernen und zu regenerieren. In der US-A-3 046 282 beispielsweise wird ein Verfahren zur Herstellung von Phthalocyaninpigmenten beschrieben, wobei rohe Kupferphthalocyanine mit einem Mahlhilfsmittel und 2-Methyl-2,4-pentandiol behandelt werden. Mahlhilfsmittel und Pentandiol werden anschliessend entfernt. Wählt man hingegen bestimmte 1,2-Dihydroxyverbindungen als Mahlhilfsmittel, so erhält man sehr gut dispergierbare Pigmente ohne die genannten Nachteile.

Die Erfindung betrifft somit ein Verfahren zur Konditionierung von organischen Pigmenten durch Mahlen in Wasser und in Gegenwart eines Mahlhilfsmittels, dadurch gekennzeichnet, dass man als Mahlhilfsmittel eine unsubstituierte oder mit Phenyl substituierte aliphatische oder cycloaliphatische 1,2-Dihydroxyverbindung mit 6 bis 30 C-Atomen verwendet.

Geeignete 1,2-Dihydroxyverbindungen sind beispielsweise Hexandiol-(1,2), Heptandiol-(1,2), Octandiol-(1,2), Nonandiol-(1,2), Decandiol-(1,2), Undecandiol-(1,2), Dodecandiol-(1,2), Tridecandiol-(1,2), Tetradecandiol-(1,2), Pentadecandiol-(1,2), Hexadecandiol-(1,2), Heptadecandiol-(1,2), Octadecandiol-(1,2), Nonadecandiol-(1,2), Icosandiol-(1,2), Hemicosandiol-(1,2), Docosandiol-(1,2), Pentacosandiol-(1,2), Triacontandiol-(1,2), 1-Phenyläthandiol-(1,2), 2-Phenyl-propandiol-(1,2), Cyclohexandiol-(1,2), Cycloheptandiol-(1,2), einzeln oder in Mischungen.

Im erfindungsgemässen Verfahren verwendet man bevorzugt unsubstituierte aliphatische 1,2-Dihydroxyverbindungen, insbesondere mit 6 bis 18 C-Atomen. Besonders bevorzugt verwendet man Hexandiol-(1,2), Octandiol-(1,2), Dodecandiol-(1,2) und Hexadecandiol-(1,2). Die 1,2-Dihydroxyverbindungen können in Mengen von insbesondere 0,05 bis 25, bevorzugt 0,5 bis 20 Gew.%, bezogen auf das zu mahlende Pigment oder Pigmentgemisch, eingesetzt werden.

Organische Pigmente, die nach dem erfindungsgemässen Verfahren konditioniert werden können, sind beispielsweise Pigmente der Perylen-, Phthalocyanin-, Perinon-, Chinacridon-, Chinophthalon-, Isoindolinon-, Isoindolin-, Dioxazin-, Anthrachinon-, Thioindigo-, Azo-, Methin- oder Azomethinreihe. Bei den Pigmenten der Phthalocyanin-, Methin- oder Azomethinreihe kommen sowohl die metallfreien als auch die Metallkomplexe in Betracht. Es ist ferner auch möglich, Pigmentmischungen einzusetzen.

Das erfindungsgemässe Verfahren eignet sich insbesondere zur Konditionierung von Pigmenten der Perylen-, Azo-, Isoindolin- oder Isoindolinonreihe, vor allem von Pigmenten, die unter dem Einfluss von mechanischen Kräften, wie Drücken, stark zur Agglomerierung neigen, beispielsweise C.I. Pigment Braun 23, C.I. Pigment Rot 220, C.I. Pigment Gelb 147, C.I. Pigment Rot 166.

Als Apparatur kann jede Vorrichtung verwendet werden, die es erlaubt, in einem flüssigen Medium das Pigment und den Trägerstoff intensiven mechanischen Kraftwirkungen zu unterwerfen. Derartige Apparaturen sind in grösserer Zahl bekannt. Sie beruhen beispielsweise auf dem Prinzip eines in flüssigem Medium erzeugten grossen Geschwindigkeitsgradienten oder einer plötzlichen Richtungsänderung, oder insbesondere auf Aufprallwirkung oder gegenseitiger Reibung von Mahlkörpern, wie Metall-, Glas- oder Porzellankugeln, Kunststoffgranulat oder Sandkörner, die durch Rotation des Gefässes, oder noch wirksamer, durch Schwingungserzeuger oder rührartige Vorrichtungen, wie beispielsweise bei den Glasperlmühlen, in Bewegung gesetzt werden.

Die Mahltemperatur ist innerhalb technisch vernünftiger Grenzen nicht kritisch. Zweckmässig wird man die Mahlung bei Temperaturen zwischen 5 und 90 °C, vorzugsweise bei 15 bis 70 °C durchführen.

Wenn auch in der Regel die zu mahlende Pigmentsuspension neutral ist, so kann es in gewissen Fällen von Vorteil sein, den pH-Wert der Pigmentsuspension in den sauren oder alkalischen Bereich zu verschieben.

Zur Mahlung können neben den erfindungsgemäss zu verwendenden 1,2-Dihydroxyverbindunge Zusätze eingesetzt werden, die die applikatorischen Eigenschaften der gemahlenen Pigmente günstig beeinflussen, wie beispielsweise Textur-Schutzmittel. Solche Zusätze kann man in Mengen von 0,05 bis 25, bevorzugt 1 bis 15 Gew.-% bezogen auf das zu mahlende Pigment oder Pigmentgemisch zugeben.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quartäre Ammoniumverbindungen, wie Tri-$(C_1–C_4)$-alkylbenzylammoniumsalze, ferner

Weichmacher, wie epoxidiertes Sojabohnenöl, Wachse, wie Polyäthylenwachs, Harzsäuren, wie Abietinsäure, Kolophoniumseife, hydriertes oder dimerisiertes Kolophonium, $C_{12}$–$C_{18}$-Paraffindisulfonsäuren, Alkylphenole oder Alkohole, wie Stearylalkohol.

Bevorzugte Texturschutzmittel sind Lauryl- oder Stearylamin, Stearinsäure, deren Amide, Salze oder Ester, epoxidiertes Sojabohnenöl, Wachse oder Harzsäuren.

In der Regel wird das erfindungsgemässe Verfahren in Abwesenheit von organischen Lösungsmitteln durchgeführt. Geringe Mengen davon können jedoch geduldet werden, soweit sie das Verfahren nicht beeinträchtigen.

Im erfindungsgemässen Verfahren kann man Pigment, 1,2-Dihydroxyverbindung, Wasser und eventuelle Zusätze gleichzeitig oder nacheinander der Mahlapparatur zuführen. Man mahlt so lange, bis das Pigment oder Pigmentgemisch in der gewünschten deckenden oder mehr transparenten Form vorliegt. In der Regel dauert dies je nach Mahlapparatur, Pigment und Zusätzen ¼ bis 72 Stunden. Die benötigte Mahldauer ist von Fall zu Fall leicht zu ermitteln.

Die Aufarbeitung kann auf bekannte Art durch Abfiltrieren der Pigmentsuspension, Entfernen der nicht im Pigment verbleibenden Zusätze und Trocknen erfolgen. Wasserunlösliche 1,2-Dihydroxyverbindungen können durch Auswaschen des Filterkuchens mit einem organischen Lösungsmittel, wie Methanol, wasserlösliche 1,2-Dihydroxyverbindungen, wie Hexandiol-(1,2) durch Auswaschen des Filterkuchens mit Wasser, wieder entfernt werden. Wenn auch nicht notwendig, so kann es je nach Pigment und dessen Verwendungszweck von Vorteil sein, wasserunlösliche 1,2-Dihydroxyverbindungen einzusetzen und sie im Pigment oder Pigmentgemisch zu belassen.

Die 1,2-Dihydroxyverbindungen wirken nämlich ihrerseits als Texturschutzmittel und können eine Reagglomerierung der Pigmentteilchen bei ihrer Weiterverarbeitung verhindern. Jedenfalls wirkt sich die Gegenwart einer 1,2-Dihydroxyverbindung im gemahlenen Pigment oder Pigmentgemisch günstig auf dessen Dispergierbarkeit aus. Zum Trocknen der Pigmente eignen sich die üblichen Apparaturen, wie Vakuum- oder Umlufttrockenschränke, Schaufeltrockner, Wirbelschichtoder Gefriertrockner oder auch Sprühtrockner.

In gewissen Fällen ist es möglich, nach dem erfindungsgemässen Verfahren Pigmentkristalle so zu zerkleinern, dass Teilchen mit einem bestimmten Habitus entstehen. So kann man beispielsweise ausgehend von sehr grobkristallinen Pigmenten, welche zudem hohe Brechungsindices aufweisen, direkt Pigmente erhalten, welche aufgrund der erzeugten Korngrösse, Korngrössenverteilung und eines hohen Anteils an isometrischen Teilchen eine hohe Deckkraft erreichen. Die bei andern Verfahren in der Regel notwendige Nachbehandlung zur Erzeugung solcher Teilchen entfällt.

Nach dem erfindungsgemässen Verfahren ist es auch möglich, sehr feinkristalline Pigmente zu erhalten, denn die Gegenwart einer 1,2-Dihydroxyverbindung verhindert eine gerade bei intensivem Mahlen oft beobachtete Reagglomerierung der feinen Pigmentteilchen. Auch wenn man beim Aufarbeiten die 1,2-Dihydroxyverbindung nicht entfernt, erzielt man mit den so erhaltenen feinkristallinen Pigmenten sehr farbstarke transparente Färbungen.

Verbleibt die 1,2-Dihydroxyverbindung nach dem Mahlen im Pigment oder Pigmentgemisch, so beobachtet man unabhängig von der Menge eine ausgezeichnete Verträglichkeit der 1,2-Dihydroxyverbindung mit dem zu färbenden Substrat. Auch werden die Eigenschaften des pigmentierten Substrates, wie z.B. die Hitze-, Wetter-, Licht- und Migrationsechtheit nicht beeinträchtigt.

Die erfindungsgemäss erhaltenen Pigmente eignen sich zum Pigmentieren von hochmolekularem organischem Material, z.B. Celluloseäthern und -estern, wie Äthylcellulose, Acetylcellulose, Nitrocellulose, Polyamiden bzw. Polyurethanen oder Polyestern, natürlichen Harzen oder Kunstharzen, insbesondere Harnstoff- und Melamin-Formaldehydharzen, Alkydharzen, Phenoplasten, Polycarbonaten, Polyolefinen, wie Polyäthylen, Polypropylen und Polystyrol, Polyvinylchlorid, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lakken oder Druckfarben vorliegen. Je nach Verwendungszweck erweist es sich als vorteilhaft, die Pigmente als Toner oder in Form von Präparaten zu verwenden.

Das mit erfindungsgemäss konditionierten Pigmenten gefärbte hochmolekulare organische Material zeichnet sich durch sehr reine und gleichmässige Nuancen, hohe Farbstärke und hohen Glanz, hohe Licht- und Wetterechtheit und hohe Hitzebeständigkeit aus.

In den nachfolgenden Beispielen bedeuten die Teile, sofern nicht anders erwähnt, Gewichtsteile und die Prozente Gewichtsprozente.

Beispiel 1:

8,1 Teile grobkristallines, nadelförmiges Perylentetracarbonsäuredianhydrid, 0,9 Teile Dodecandiol-(1,2) werden zusammen in einem 500 Vol.-Teile fassenden Becherglas in 40 Teilen Wasser mit 90 Vol.-Teilen Sand (Ottawa Sand mit einem Durchmesser von 2–3 mm) und einem Nylon-Scheibenrührer bei einer Rührgeschwindigkeit von 2000 U/Min. ohne Aussenkühlung während 3½ Stunden gemahlen. Die gemahlene Pigmentsuspension wird vom Sand abgetrennt, welcher mit Wasser nachgewaschen wird, dann abfiltriert. Man trocknet den Presskuchen bei 70–80 °C im Vakuumtrockenschrank und pulverisiert das Trockengut. Man erhält 8 Teile ca. 10% Dodecandiol-(1,2) enthaltendes konditioniertes Perylentetracarbonsäuredianhydridpigment, welches eingefärbt in Weich-PVC-Walzfolien sehr farbstarke, deckende, rote Färbungen mit ausgezeichneten Echtheiten ergibt. Das konditionierte Pigment enthält eine Vielzahl von Partikeln mit isometrischer Teilchenform, worauf in hohem Masse die hohe Deckkraft zurückzuführen ist.

Beispiel 2:

8,1 Teile grobkristallines, nadelförmiges nach Beispiel 1 der EP-A 23 191 erhaltenes Perylentetracarbonsäure-bis-(3,5-dimethyl-phenyl)-imid der γ-Modifikation, 0,9 Teile Octandiol-(1,2) werden zusammen in einem 500 Vol.-Teile fassenden Becherglas in 40 Teilen Wasser mit 90 Vol.-Teilen Sand (Ottawa Sand mit einem Durchmesser von 2–3 mm) und einem Nylon-Scheibenrührer bei einer Rührgeschwindigkeit von 2000 U/Min. ohne Aussenkühlung während 5 Stunden gemahlen. Die gemahlene Pigmentsuspension wird vom Sand abgetrennt, welcher mit Wasser nachgewaschen wird, dann abfiltriert. Man trocknet den Presskuchen bei 70–80 °C im Vakuumtrockenschrank und pulverisiert das Trockengut. Man erhält 8,0 Teile konditioniertes Perylentetracarbon-
säure-bis-(3,5-dimethyl-phenyl)-imidpigment, welches eingefärbt in Lacke und Kunststoffe farbstarke, deckende blaustichigrote Färbungen mit ausgezeichneten Echtheiten ergibt. Das auf diese Art konditionierte Pigment weist eine Vielzahl von Partikeln mit isometrischer Teilchenform auf, worauf in hohem Masse die hohe Deckkraft zurückzuführen ist.

Beispiel 3:

In einem 300 Vol.-Teile fassenden Becherglas werden 13,0 Teile braunes Disazokondensationspigment C.I. Pigment Braun 23, 1,7 Teile Dodecandiol-(1,2), 0,3 Teile Stearylamin und 0,3 Teile Stearinsäure in 130 Teilen Wasser unter Rühren auf 70 °C erwärmt. Nach ca. 15-minütigem Rühren wird die Suspension auf 20–25 °C abgekühlt und in eine 500 Vol.-Teile fassende Glasperlmühle umgegossen. Man verdünnt die Pigmentsuspension mit Wasser auf 140 Teile und gibt 400 Teile Glaskugeln mit einem Teilchendurchmesser von 3,5–4,0 mm dazu, mahlt die Suspension bei 30–35 °C während 5½ Stunden und stellt den pH-Wert nach der Beendigung des Mahlprozesses auf 7,0. Die Pigmentsuspension wird von den Glaskugeln abgetrennt, welche mit Wasser etwas nachgewaschen werden, dann abfiltriert. Man wäscht den Presskuchen mit Wasser und trocknet ihn bei 70–80 °C im Vakuumtrockenschrank. Man erhält 13,0 Teile braunes Pigment, welches beim Einarbeiten in Weich-PVC-Walzfolien transparente, sehr farbstarke, braune Färbungen mit ausgezeichneten Echtheiten ergibt. Das auf diese Art konditionierte Pigment ist trotz der feinen Partikelform sehr gut in der Kunststoffmasse dispergierbar.

Beispiel 4:

Verfährt man auf analoge Art wie in Beispiel 2 beschrieben, verwendet aber anstelle von Perylentetracarbonsäure-bis-(3,5-dimethyl-phenyl)-imid das nach Beispiel 51 in der deutschen Patentschrift Nr. 2 814 526 erhaltene orangefarbene Isoindolinpigment, und mahlt anstelle von 5 Stunden 20 Stunden, so erhält man ein Pigment, welches in Lacke und Kunststoffe eingearbeitet, sehr deckende und farbstarke orange Färbungen mit ausgezeichneten Echtheiten ergibt. Das auf diese Art konditionierte Pigment weist eine Vielzahl von Partikeln mit isometrischer Teilchenform auf.

Beispiel 5:

In einem 300 Vol.-Teile fassenden Becherglas werden 13,0 Teile grobkristallines Disazokondensationspigment C.I. Pigment Rot 220, 1,8 Teile Dodecandiol-(1,2) und 0,2 Teile Hexadecandiol-(1,2) in 130 Teilen Wasser unter Rühren auf 70 °C erwärmt. Nach ca. 15-minütigem Rühren wird die Suspension auf 20–30 °C abgekühlt und in eine 500 Vol.-Teile fassende Glasperlmühle umgegossen. Man verdünnt die Pigmentsuspension mit Wasser auf 140 Teile und gibt 400 Teile Glaskugeln mit einem Teilchendurchmesser von 3,5–4,0 mm hinzu und mahlt die Suspension während 2¾ Stunden bei 30 bis 35 °C. Die Pigmentsuspension wird von den Glaskugeln abgetrennt, welche mit Wasser nachgewaschen werden, dann abfiltriert. Man trocknet den Presskuchen bei 70–80 °C im Vakuumtrockenschrank und erhält 13,3 Teile rotes Pigment, welches nach dem Pulverisieren in einwandfreier Dispergierung transparente, farbstarke, rote Färbungen beim Einarbeiten in Kunststoffe und Lacke ergibt.

Beispiel 6:

In einer 500 Vol.-Teile fassenden Glasperlmühle werden 13,5 Teile grobkristallines Disazokondensationspigment C.I. Pigment Rot 166, 1,5 Teile Dodecandiol-(1,2) und 130 Teile Wasser verrührt. Man gibt 400 Teile Glaskugeln mit einem Durchmesser von 3,5 bis 4,0 mm zur Pigmentsuspension und mahlt sie bei 30 bis 35 °C während 12 Stunden bei einer Rührgeschwindigkeit von 320 U/Min. Die Pigmentsuspension wird von den Glaskugeln abgetrennt, welche mit Wasser nachgewaschen werden, dann abfiltriert. Man wäscht den Presskuchen mit Wasser und trocknet ihn bei 70 bis 80 °C im Vakuumtrockenschrank. Man erhält 14,1 Teile ca. 10% Dodecandiol-(1,2) enthaltendes Pigment, welches nach dem Pulverisieren in einwandfreier Dispergierbarkeit in Kunststoffe und Lacke einarbeitbar ist und sehr farbstarke, gegenüber der Ausgangsform viel transparentere, rote Färbungen ergibt.

Beispiel 7:

In einer 500 Vol.-Teile fassenden Glasperlmühle werden 13,5 Teile des nach Beispiel 27 der EP-A 36 835 erhaltenen grobkristallinen Nickel-Azomethinkomplexes, 1,5 Teile Octandiol-(1,2) und 125 Teile Wasser zusammen verrührt. Man gibt 400 Teile Glaskugeln mit einem Durchmesser von 3,5–4,0 mm zur Suspension und mahlt diese bei 30–35 °C während 9 Stunden bei einer Rührgeschwindigkeit von 320 U/Min. Die Suspension wird von den Glaskugeln abgetrennt, welche mit Wasser gewaschen werden, dann abfiltriert. Man wäscht mit Methanol das Octandiol-(1,2) aus dem Presskuchen heraus und trocknet ihn bei 70–80 °C im Vakuumtrockenschrank. Man erhält 13 Teile eines gelbstichigroten Pigmentes, welches gegenüber dem Ausgangsprodukt transparenter und farbstärker ist. Beim Einarbeiten in Einbrennlacke erhält man gelbstichigrote Färbungen mit ausgezeichneten Licht- und Wetterechtheiten.

Beispiel 8:

Verfährt man auf analoge Art wie in Beispiel 7 beschrieben, verwendet aber anstelle von Octandiol-(1,2) Hexandiol-(1,2) und wäscht den Presskuchen anstelle mit Methanol mit Wasser, so erhält man 12,8 Teile eines gelbstichigroten Pigmentes mit ähnlich guten Eigenschaften.

Beispiel 9:

Verfährt man auf analoge Art wie in Beispiel 7 beschrieben, verwendet aber anstelle des dort beschriebenen Pigmentes das grobkristalline anthrachinoide Pigment C.I. Pigment Gelb 147 und anstelle von 1,5 Teilen Octandiol-(1,2) eine Mischung von 1,2 Teilen Dodecandiol-(1,2) und 0,3 Teilen Octandiol-(1,2), so erhält man eine gelben Pigmenttoner, welcher in einwandfreier Dispergierbarkeit sich in Lacke und Kunststoffe einarbeiten lässt und gegenüber der Ausgangsform viel reinere, transparentere und farbstärkere, gelbe Färbungen mit sehr guten Echtheiten ergibt.

Beispiel 10:

180 Teile rohes Isoindolinonpigment C.I. Pigment Gelb 110, 20 Teile Dodecandiol-(1,2) werden zusammen in 1500 Teilen Wasser in einem Becherglas verrührt, unter Rühren auf 70 °C erwärmt und nach 15 Minuten auf 30–35 °C abgekühlt. Die Pigmentsuspension wird mit Wasser auf ein Gewicht von 1800 Teilen verdünnt. In einer ®Dyno-Mühle, Typ KDL, der Firma Willy A. Bachofen, Basel, versehen mit einem 600 Vol.-Teile fassenden Stahlmahlbehälter, gefüllt mit 480–510 Vol.-Teilen Glaskugeln mit einem Durchmesser von 1 mm, wird die Pigmentsuspension bei einer Rührgeschwindigkeit von 3000 U/Min. und einer Pumpengeschwindigkeit von 30 U/Min. intensiv bei 30–35 °C während 3 Stunden gemahlen. Die Pigmentsuspension wird von den Glaskugeln getrennt, welche mit 500 Teilen Wasser nachgewaschen werden. Man filtriert ab, wäscht den Presskuchen mit 1000 Teilen Wasser, trocknet im Vakuumtrockenschrank bei 70–80 °C und pulverisiert das Pigment in einem ®Osterizer-Mixer. Man erhält 190 Teile eines ca. 10% Dodecandiol-(1,2) enthaltenden gelben Pigmenttoners, welcher gegenüber der Ausgangsform farbstärkere, sehr transparente gelbe Färbungen beim Einarbeiten in Lacken und Kunststoffen ergibt. Trotz der hohen Feinheit des gemahlenen Pigments ist es ausgezeichnet in den Applikationsmedien dispergierbar.

Beispiel 11:

a) In einem Becherglas werden 80 Teile Dodecandiol-(1,2) auf 80 °C erwärmt und geschmolzen. Unter Rühren gibt man bei 80 bis 100 °C 20 Teile Polyäthylen-Polyvinylacetat-Copolymer AC-Copolymer 400® (der Firma Allied Chemical), und rührt während 20 Min. bei ca. 100 °C. Dabei entsteht eine klare Schmelze, welche dann auf 0 °C abgekühlt wird, wobei sie erstarrt. Die auf diese Art und Weise erhaltene erstarrte Mischung von Dodecandiol-(1,2) und AC-Copolymer 400® wird im Osterizer-Mixer pulverisiert und durch ein Metallsieb mit einer Maschenweite von 1 mm gedrückt. Die Mischung liegt nun als weisses Pulver vor.

b) Verfährt man auf analoge Art und Weise wie im Beispiel 10 beschrieben, verwendet aber anstelle von 20 Teilen Dodecandiol-(1,2) 20 Teile des nach Beispiel 10a hergestellten weissen Pulvers bestehend aus 80% Dodecandiol-(1,2) und 20% AC-Copolymer 400® und mahlt anstelle von 3 Stunden nur 2½ Stunden, so erhält man ein gelbes Pigment mit ebensoguten Eigenschaften.

Beispiel 12:

Verfährt man auf analoge Art wie in Beispiel 6 beschrieben, verwendet aber anstelle von C.I. Pigment Rot 166 ein direkt aus der Synthese anfallendes grobkristallines Perylentetracarbonsäure-N,N'-dimethylimidpigment und mahlt anstelle von 12 Stunden 9 Stunden, so erhält man ein bordeauxfarbiges Pigment, welches stark deckende Färbungen mit ausgezeichneten Echtheiten beim Einarbeiten in Kunststoffen und Lacken ergibt.

Beispiel 13:

Verfährt man auf analoge Art wie in Beispiel 6 beschrieben, verwendet aber anstelle von C.I. Pigment Rot 166 das direkt aus der Synthese anfallende grobkristalline Perinonpigment C.I. Pigment Orange 43 und mahlt anstelle von 12 Stunden 7 Stunden, so erhält man ein beim Einarbeiten in Kunststoffen und Lacken gegenüber dem Ausgangsprodukt wesentlich farbstärkeres und reinere Färbungen ergebendes Pigment.

Beispiel 14:

Verwendet man anstelle von C.I. Pigment Rot 166 das direkt aus der Synthese anfallende Dioxazinpigment C.I. Pigment Violett 37, mahlt anstelle von 12 Stunden 9 Stunden und verfährt sonst auf analoge Art wie in Beispiel 6 beschrieben, so erhält man ein gegenüber dem Ausgangsprodukt viel farbstärkeres, reineres, violettes Pigment, welches sich ausgezeichnet in Kunststoffen, Lakken und Drucktinten einarbeiten lässt.

Beispiel 15:

Verwendet man anstelle von C.I. Pigment Rot 166 das direkt aus der Synthese anfallende Chinacridonpigment C.I. Pigment Rot 122, mahlt anstelle von 12 Stunden 10 Stunden und verfährt sonst auf analoge Art wie in Beispiel 6 beschrieben, so erhält man ein gegenüber dem Ausgangsprodukt farbstärkeres, sehr gut dispergierbares, blaustichig rotes Pigment mit ausgezeichneten Echtheiten.

Beispiel 16:

Verwendet man anstelle von C.I. Pigment Rot 166 ein direkt aus der Synthese anfallendes Tetrachlorthioindigopigment, mahlt anstelle von 12 Stunden nur 6 Stunden und verfährt sonst auf analoge Art wie in Beispiel 6 beschrieben, so erhält man ein gegenüber der Ausgangsware farbstärkeres, reineres, violettes Pigment, welches sich ausgezeichnet in Kunststoffen, Lacken und Drucktinten einarbeiten lässt.

Beispiel 17:

Verfährt man auf analoge Art wie in Beispiel 6 beschrieben, verwendet aber anstelle von C.I. Pigment Rot 166 rohes β-Cu-Phthalocyaninpigment und mahlt anstelle von 12 Stunden 6 Stunden, so erhält man ein gegenüber der Ausgangsform farbstärkeres, blaues Pigment, welches sich in einwandfreier Dispergierbarkeit in Kunststoffen einarbeiten lässt.

Beispiel 18:

Verfährt man auf analoge Art wie in Beispiel 6 beschrieben, verwendet aber anstelle von C.I. Pigment 166 eine Pigmentmischung bestehend aus 50% Isoindolinonpigment C.I. Pigment Gelb 110 und 50% Disazokondensationspigment C.I. Pigment Braun 23 und mahlt anstelle von 12 Stunden nur 3 Stunden, so erhält man nach dem Einarbeiten in Kunststoffen oder Lacken gelbstichigbraune Ausfärbungen mit ausgezeichneten Hitze-, Licht- und Wetterechtheiten.

Beispiel 19:

Verfährt man auf analoge Art wie in Beispiel 9 beschrieben, verwendet aber anstelle der Mischung von 1,2 Teilen Dodecandiol-(1,2) und 0,3 Teilen Octandiol-(1,2) 1,5 Teile Hexadecandiol-(1,2), so erhält man einen gelben Pigmenttoner mit ähnlich guten Eigenschaften.

Beispiel 20:

Eine Mischung von 130 Teilen Steatitkugeln von 8 mm Durchmesser, 47,5 Teilen Alkydmelamineinbrennlack, bestehend aus 60 Teilen Beckosol 27–320®, (60%ig in Xylol, Reichhold Chemie AG), 36 Teilen Super-Beckamin 13–501®, (50%ig, Reichhold Chemie AG), 2 Teilen Xylol und 2 Teilen Äthylenglykolmonomethyläther, und 2,5 Teilen des nach Beispiel 7 erhaltenen Metallkomplexpigmentes wird in einer 200 ml Glasflasche mit Twistoff-Verschluss während 120 Stunden auf einem Rollgestell dispergiert. Nach Abtrennen der Steatitkugeln werden 2,4 Teile der so dispergierten Volltonmischung, 6,0 Teile Titandioxid Kronos RN 59® (Kronos Titan GmbH), 24,0 Teile des obigen Alkydmelamineinbrennlacks vermischt, auf Aluminiumbleche gespritzt und anschliessend während 30 Minuten bei 130 °C eingebrannt. Man erhält gelbstichigrote Färbungen mit ausgezeichneten Echtheiten.

Beispiel 21:

Eine Mischung von 1,0 Teilen des nach Beispiel 6 erhaltenen Pigmentes 1,0 Teil Antioxydans IRGANOX 1010® (CIBA-GEIGY AG) und 1000,0 Teilen Polyäthylen-HD Granulat Vestolen A 60–16® (Firma Hüls) wird während 15 Minuten in einer Glasflasche auf einer Rollbank vorgemischt. Danach wird die Mischung in zwei Passagen auf einem Einwellenextruder extrudiert, das so erhaltene Granulat auf der Spritzgussmaschine (Allround Aarburg 200) bei 220 °C zu Platten verspritzt und während 5 Minuten bei 180 °C nachgepresst. Die Pressplatten weisen farbstarke rote Nuancen mit ausgezeichneten Echtheiten auf.

Beispiel 22:

Für die Färbung von Polyvinylchlorid wird eine Mischung von 65 Teilen stabilisiertem Polyvinylchlorid, 35 Teilen Dioctylphthalat, 0,2 Teilen des nach Beispiel 1 hergestellten Perylenpigmentes hergestellt und zwischen zwei Rollen eines Kalanders bei ca. 150 °C während 5 Minuten hin- und herbewegt. Die so erhaltene Weich-PVC-Folie weist eine sehr deckende, sehr farbstarke, rote Färbung mit ausgezeichneten Lichtechtheiten auf.

**Patentansprüche**

1. Verfahren zur Konditionierung von organischen Pigmenten durch Mahlen in Wasser und in Gegenwart eines Mahlhilfsmittels, dadurch gekennzeichnet, dass man als Mahlhilfsmittel eine unsubstituierte oder mit Phenyl substituierte aliphatische oder cycloaliphatische 1,2-Dihydroxyverbindung mit 6 bis 30 C-Atomen verwendet.

2. Verfahren nach Anspruch 1, dadurch gekennzeichnet, dass man eine unsubstituierte aliphatische 1,2-Dihydroxyverbindung verwendet.

3. Verfahren nach Anspruch 1, dadurch gekennzeichnet, dass man eine 1,2-Dihydroxyverbindung mit 6 bis 18 C-Atomen verwendet.

4. Verfahren nach Anspruch 1, dadurch gekennzeichnet, dass man Hexandiol-(1,2), Octandiol-(1,2), Dodecandiol-(1,2) oder Hexadecandiol-(1,2) verwendet.

5. Verfahren nach Anspruch 1, dadurch gekennzeichnet, dass man die 1,2-Dihydroxyverbindung in Mengen von 0,5 bis 20 Gew.-%, bezogen auf das zu mahlende Pigment oder Pigmentgemisch, einsetzt.

6. Verfahren nach Anspruch 1, dadurch gekennzeichnet, dass man neben der 1,2-Dihydroxyverbindung ein Texturschutzmittel verwendet.

7. Verfahren nach Anspruch 6, dadurch gekennzeichnet, dass man als Texturschutzmittel Lauryl- oder Stearylamin, Stearinsäure, deren Amide, Salze oder Ester, epoxidiertes Sojabohnenöl, Wachse oder Harzsäuren verwendet.

8. Verfahren nach Anspruch 1, dadurch gekennzeichnet, dass man die Mahlung bei 15 bis 70 °C durchführt.

9. Verfahren nach Anspruch 1, worin die zu mahlenden Pigmente der Perylen-, Azo-, Isoindolin- oder Isoindolinonreihe angehören.

10. Verfahren nach Anspruch 1, worin die zu mahlenden Pigmente unter dem Einfluss von mechanischen Kräften stark zur Agglomerierung neigen.

11. Verwendung der gemäss Anspruch 1 erhaltenen Pigmente zum Pigmentieren von hochmolekularem organischem Material.

12. Hochmolekulares organisches Material enthaltend ein nach Anspruch 1 erhaltenes Pigment.

**Claims**

1. A process for conditioning organic pigments by grinding them in water in the presence of a grinding aid, which comprises using as the grinding aid an unsubstituted or phenyl-substituted aliphatic or cycloaliphatic 1,2-dihydroxy compound having 6 to 30 C atoms.

2. A process according to Claim 1, wherein an unsubstituted aliphatic 1,2-dihydroxy compound is used.

3. A process according to Claim 1, wherein a 1,2-dihydroxy compound having 6 to 18 C atoms is used.

4. A process according to Claim 1, wherein hexane-1,2-diol, octane-1,2-diol, dodecane-1,2-diol or hexadecane-1,2-diol is used.

5. A process according to Claim 1, wherein the 1,2-dihydroxy compound is used in amounts of 0.5 to 20% by weight, based on the pigment or pigment mixture to be ground.

6. A process according to Claim 1, wherein a texture-protecting agent is used in addition to the 1,2-dihydroxy compound.

7. A process according to Claim 6, wherein the texture-protecting agent used is laurylamine, stearylamine, stearic acid, its amides, salts or esters, epoxidised soya bean oil, waxes or resin acids.

8. A process according to Claim 1, wherein the grinding is carried out at 15 to 70°C.

9. A process according to Claim 1, wherein the pigments to be ground belong to the perylene, azo, isoindoline or isoindolinone series.

10. A process according to Claim 1, wherein the pigments to be ground tend to agglomerate under the influence of mechanical forces.

11. The use of the pigments obtained according to Claim 1, for pigmenting high molecular weight organic material.

12. High molecular weight organic material which contains a pigment obtained according to Claim 1.

**Revendications**

1. Procédé de conditionnement de pigments organiques par broyage dans de l'eau en présence d'un adjuvant de broyage, procédé caractérisé en ce que l'adjuvant de broyage est un composé 1,2-dihydroxylique aliphatique ou cycloaliphatique en $C_6$ à $C_{30}$, sans substituants ou portant un groupe phényle.

2. Procédé selon la revendication 1, caractérisé en ce que l'on utilise un composé 1,2-dihydroxylique aliphatique non substitué.

3. Procédé selon la revendication 1, caractérisé en ce que l'on utilise un composé 1,2-dihydroxylique ayant de 6 à 18 atomes de carbone.

4. Procédé selon la revendication 1, caractérisé en ce que l'on utilise de l'hexane-diol-(1,2), de l'octane-diol-(1,2), du dodécane-diol-(1,2) ou de l'hexadécane-diol-(1,2).

5. Procédé selon la revendication 1, caractérisé en ce que l'on ajoute le composé dihydroxylique dans une proportion de 0,05 à 20% du poids du pigment ou du mélange de pigments à broyer.

6. Procédé selon la revendication 1, caractérisé en ce qu'en plus du composé dihydroxylique, on ajoute un agent de protection de la texture du pigment.

7. Procédé selon la revendication 6, caractérisé en ce que l'on utilise comme agent de protection texturale de la laurylamine ou de la stéarylamine, de l'acide stéarique ou un amide, un sel ou un ester de cet acide, de l'huile de soja époxydée, des cires ou des acides résiniques.

8. Procédé selon la revendication 1, caractérisé en ce que l'on effectue le broyage entre 15 et 70°C.

9. Procédé selon la revendication 1 dans lequel les pigments à broyer appartiennent à la série du pérylène, à la série azoïque, à la série de l'isoindoline ou à la série de l'isoindolinone.

10. Procédé selon la revendication 1 dans lequel les pigments à broyer ont une forte tendance à s'agglomérer sous l'action de forces mécaniques.

11. L'emploi des pigments qui ont été obtenus suivant l'une quelconque des revendications précédentes pour la pigmentation de matières organiques macromoléculaires.

12. Les matières organiques macromoléculaires qui contiennent un pigment obtenu suivant l'une quelconque des revendications précédentes.